# EUROPEAN PATENT APPLICATION

(11) **EP 4 582 297 A1**
(43) Date of publication of application: **09.07.2025**
(21) Application number: 24150216.0
(22) Date of filing: 03.01.2024
(51) Int. Cl.: B60L 53/16

(54) **INTERCONNECTOR FOR FORMING AN ELECTRICAL CONNECTION BETWEEN A CHARGING STATION AND AN ELECTRIC VEHICLE, ELECTRIC VEHICLE CHARGING SYSTEM, AND METHOD OF CHARGING AN ELECTRIC VEHICLE**

(71) Applicant: ABB E-mobility B.V., 2629 JG Delft (NL)
(72) Inventor: DREIER-SCHMIDT, Sebastian, 02827 Goerlitz (DE); GARCIA-FERRE, Francisco, 5405 Baden (CH)
(74) Representative: Zimmermann & Partner Patentanwälte mbB

(57) **Abstract**

An interconnector for forming an electrical connection between a direct current, DC, charging station and an electric vehicle is described. The interconnector includes at least one first magnetic element configured for interacting, by magnetic interaction, with a second magnetic element of a complement for the interconnector. The first magnetic element includes an electromagnet. The magnetic interaction between the first magnetic element and the second magnetic element is attractive so that a magnetic interaction force attracts the interconnector to the complement.

## Description

Aspects of the invention relate to the charging of electric vehicles, in particular an interconnector, such as a connector and/or a vehicle inlet, for electrically connecting an electric vehicle to an electric vehicle charging system. Aspects of the invention particularly relate to a connector and an inlet including magnetic elements.

### Technical background:

Electric vehicles typically include an on-board battery to power a drivetrain of the electric vehicle. One method of charging the on-board battery includes connecting the electric vehicle to a charging station by inserting a charging connector into a vehicle inlet, and providing a charging power by the charging station. The electric vehicle is typically immobilized during charging.

Recent improvements in charging technology aim to decrease vehicle downtime during charging by increasing the charging power. For example, the Megawatt Charging System known at the time of filing this disclosure aims to provide a direct current (DC) charging power of up to 3.75 megawatts (MW). Such charging systems may provide the charging power at currents of up to 3000 Amperes (A), and in some configurations utilize active cooling of the charging cable and/or connector. Beneficially, such charging systems may charge even large electric vehicles with limited downtime.

To handle large charging currents, a charging cable utilized in megawatt charging may be heavier compared to e.g. a known single- or even multi-phase AC charging cable. Thus, it is desirable to assist a user or an automated system in forming a stable and reliable charging connection, and particularly to assist the user or automated system in plugging a connector into a receptacle, such as a vehicle inlet. The present disclosure solves the above-described problem at least in part.

### Summary of the invention

The invention is set out in the appended set of claims.

According to an aspect, an interconnector for forming an electrical connection between a direct current, DC, charging station and an electric vehicle is described. The interconnector includes at least one first magnetic element configured for interacting, by magnetic interaction, with a second magnetic element of a complement for the interconnector. The first magnetic element comprises an electromagnet. The magnetic interaction between the first magnetic element and the second magnetic element is attractive so that a magnetic interaction force attracts the interconnector to the complement.

According to an aspect, a connector for an electric vehicle charging station is described. The connector is configured for being inserted into an inlet of an electric vehicle, and includes electrical contacts for forming an electrical connection with the inlet and configured for providing a DC charging power, and a connector magnetic element. The connector magnetic element is configured for interacting, by magnetic interaction, with an inlet magnetic element of the inlet. The magnetic interaction between the inlet magnetic element and the connector magnetic element is attractive so that a magnetic interaction force attracts the connector to the inlet.

According to an aspect, an inlet for an electric vehicle configured for receiving a connector of an electrical vehicle charging station is described. The inlet includes electrical contacts for forming an electrical connection with the connector and configured for receiving a DC charging power, and an inlet magnetic element configured for interacting, by magnetic interaction, with a connector magnetic element of the connector. The magnetic interaction between the inlet magnetic element and the connector magnetic element is attractive so that a magnetic interaction force attracts the connector to the inlet.

According to an aspect, an electric vehicle charging system is described. The charging system may include a connector according to aspects and/or embodiments described herein. The charging system may include an inlet according to aspects and/or embodiments described herein.

According to an aspect, a method of charging an electric vehicle is described. The method includes providing an inlet of an electric vehicle, the inlet including at least one inlet magnetic element configured for interacting with a connector magnetic element; providing a connector, the connector including at least one connector magnetic element configured for interacting with an inlet magnetic element; and placing the connector into a vicinity of the inlet to cause a magnetic interaction between the inlet magnetic element and the connector magnetic element. The magnetic interaction causes a force between the inlet and the connector, the force attracting the connector to the inlet. The method further includes inserting the connector into the inlet.

According to an aspect, a vehicle is described. The vehicle may be an electric or hybrid vehicle. The vehicle may be a plug-in vehicle, such as a plug-in hybrid or a battery-electric vehicle. The vehicle typically includes an on-board battery for holding an electric charge and powering a drivetrain, such as a propulsion system including one or more electric motors. The vehicle may be a passenger vehicle, such as a car, or a commercial vehicle, such as a truck or lorry. The vehicle may be a construction and/or industrial vehicle. The vehicle may be an aircraft, such as an airplane, helicopter, or variations thereof. The electric vehicle may be a watercraft, such as a boat or ship. The electric vehicle may be a rail-going vehicle, such as a train or locomotive.

According to an aspect, an electric vehicle charging system is described. The vehicle charging system may include a vehicle charging station. The charging station typically is provided as or in a static installation, such as a charge point or an electric vehicle supply installation. The vehicle charging station may be configured for direct current (DC) charging, fast-charging, and/or even megawatt charging. For example, the vehicle charging station may be configured for providing a charging power of at least 50 kW, 100 kW, 200 kW, at least 350 kW, at least 500 kW, at least 750 kW, at least 1 MW, at least 2 MW, or even at least 3 MW. For example, the vehicle charging station may be configured as a megawatt charging system (MCS). For example, the vehicle charging station may be configured for providing the charging power at a current of at least 500 Ampere (A), at least 750 A, at least 1000 A, at least 1500 A, at least 2000 A, or even at about 3000 A. The charging power may have a voltage of at least 100 Volt (V), at least 200 V, at least 500 V, at least 750 V, or even at least 1000 V.

According to an aspect, the vehicle charging station may include a charging column. The vehicle charging station may include a charging cable and a connector provided at an end of the cable. The connector is configured for being inserted, and/or plugged into a vehicle inlet for forming a transient electrical connection between the charging station and the vehicle. Optionally, the charging station may include further components, such as a socket outlet configured for having inserted therein a plug of the charging cable provided at an end other than the connector end. Alternatively, the charging cable may be permanently attached to the charging station.

According to an aspect, the charging station may include a liquid cooling system. The liquid cooling system may be configured for cooling the charging cable, the connector, the station inlet and/or the vehicle inlet. For example, the charging cable may include liquid channels for circulating a cooling liquid, such as a cooling oil. Beneficially, the cooling system may enable the charging cable and/or the connector to transfer larger charging currents and/or charging powers than in a non-liquid-cooled charging station, particularly while providing a comparably light charging cable suitable for being manually operated, e.g. manually picked up, positioned about, and/or plugged into the vehicle inlet.

According to an aspect, an interconnector is described. The interconnector may be a connector for or of an electric vehicle charging station, and may be configured for being inserted into an inlet of an electric vehicle. Alternatively, the interconnector may be an inlet for or of an electric vehicle, and may be configured for receiving a connector of an electrical vehicle charging station. The interconnector may be configured for forming an electrical connection with a complement of the interconnector, particularly a plug-and-socket type connection. For example, the interconnector may be the connector, and the complement may be the inlet of the electric vehicle. For example, the interconnector may be the inlet of the electric vehicle, and the complement may be the connector.

According to embodiments, a connector is described. The connector may be a Megawatt Charging System connector, such as a described in "CharIN Whitepaper Megawatt Charging System (MCS), Recommendations and requirements for MCS related standards bodies and solution suppliers, Version 1.0, 2022-11-25", and/or according to standard IEC 61851 known at the time of filing this disclosure. According to embodiments, the inlet may be configured for receiving the connector. According to embodiment, the connector may be connector as described in one or more of the standards ISO 5474-3, IEC TS 63379, IEC 61851-23-3, ISO 15118, and/or J3271-1 to -5 as known at the time of filing this disclosure.

Embodiments according to this disclosure allow a user, or even a (semi-)automated system for connecting a charging connector to a vehicle inlet, to more easily and reliably connect a charging connector to an electric vehicle. In particular, a force formed between the magnetic elements may assist in or support a plug-in operation. In some embodiments, the force may assist in aligning the charging connector to the vehicle inlet. In some embodiments, one or more of the magnetic elements may be selectively switchable, i.e. activatable and de-activatable, which may provide advantages during the plug-in operation, while not hindering or even assisting a disconnecting operation. According to some aspects, the systems and methods described herein may assist the user in forming a safer and/or more reliable charging connection, by ascertaining that no excessive outside force is required for fully inserting a plug into a receptacle. Likewise, the systems and methods described herein may increase the lifespan of a connector and/or a vehicle inlet by reducing outside mechanical stress being exerted while connecting the connector to the inlet.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a schematic plan view of a connector according to embodiments;
- Fig. 2: is a schematic side view of a contact of a connector according to embodiments;
- Fig. 3: is a schematic plan view of an inlet according to embodiments;
- Fig. 4: is a schematic side view of a contact of an inlet according to embodiments;
- Fig. 5: is a schematic cutaway side view of a connector according to embodiments being inserted in a vehicle inlet according to embodiments;
- Fig. 6: is a schematic side view of a connector according to embodiments being inserted into a vehicle inlet according to embodiments;
- Fig. 7: is a method of charging an electric vehicle according to embodiments;
- Fig. 8: is a schematic perspective view of a magnetic element according to embodiments; and
- Fig. 9: is a schematic perspective view of a magnetic element according to embodiments in an inlet or a connector according to embodiments.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. In the drawings, some elements may not be drawn to scale or be omitted for clarity. Some elements shown in one embodiment as a counterpart of another embodiment may be exchangeable between the embodiments, i.e. a specific pair of corresponding and/or complementing features may be provided in either configuration, and the feature pair is not limited by the description of one element being provided for a specific embodiment.

Unless specified otherwise, the description of a part or aspect in one embodiment applies to a corresponding part or aspect in another embodiment as well.

The following embodiments generally relate to a connector and a vehicle inlet which can interact with one another in a plug-and-socket manner. To help in understanding the disclosure, a connector according to embodiments may be described as a plug, and a vehicle inlet according to embodiments may be described as a socket. However, this should not be understood as a limitation. For example, the connector may have socket-like characteristics, and the vehicle inlet may have plug-like characteristics. Some aspects of the disclosure described with reference to a connector may likewise apply to a vehicle inlet, and some aspects of the disclosure described with reference to a vehicle inlet may likewise apply to a connector.

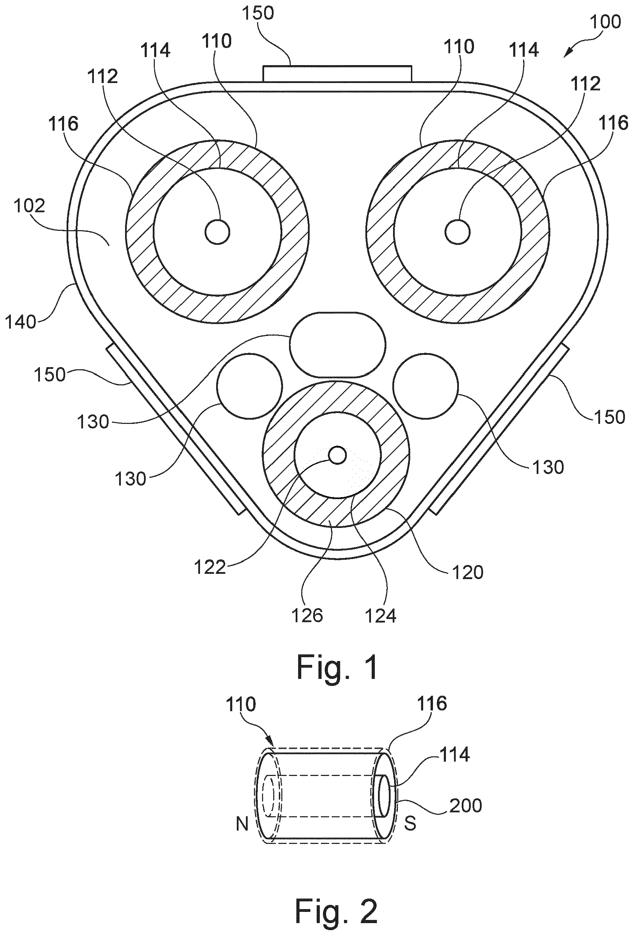

Referring now to Fig. 1, a schematic plan view of a connector 100 according to an embodiment is shown. The connector 100 includes electrical contacts, particularly two direct current (DC) contacts 110, such as a +DC and -DC contact, and one protective earth (PE) contact 120.

According to embodiments, the connector 100 may further include communication and/or detection contacts, pins or pin receptacles configured for forming communication and/or detection contacts between a charging station and the electric vehicle. For example, the connector 100 may include data contacts, such as four data contacts 130 shown in Fig. 1, for forming a communication interface with the electric vehicle according to an electric vehicle charging and/or communication standard, such as ISO 15118, particularly ISO 15118-20 as known at the time of filing this disclosure.

The connector 100 shown in Fig. 1 has a body with a surface 102, which may be essentially parallel to the drawing plane. The DC contacts 110, the PE contact 120 and/or the data contacts 130 may protrude from the surface 102, e.g. towards the viewer. Furthermore, the connector 100 may include a protective skirt 140 protruding towards the viewer and surrounding the contacts.

Each DC contact 110 and the PE contact 120 includes a central pin 112, 122 protruding from the surface 102. The pin may be guidance pin, and/or may be a conductive pin, e.g. for forming an electrical connection with a corresponding receptacle of the vehicle inlet. Each DC contact 110 and the PE contact 120 further includes a sleeve 116, 126 provided about the central pin, e.g. coaxially provided about the central pin. The sleeve 116, 126 protrudes from the surface 102. The sleeve 116, 126 may protrude further than the pin 112, 122. A groove 114, 124 is provided between the sleeve 116, 126 and the pin 112, 122. The groove may be essentially plan with the surface 102.

An electrical contact may be formed between the pin 112, 122 and a receptacle, such as an inlet contact, of the vehicle inlet. Additionally, or alternatively, an electrical contact may be formed between a conductive surface being provided within the groove 114, 124, such as an inner sidewall of the groove 114, 124, e.g. the surface of the groove 114, 124 facing the pin 112, 122 and/or forming the inner circumference of the groove 114, 124. For example, the contacts 110, 120 may be tulip-type contacts. In particular, the contacts 110, 120 may include tulip-type sleeves 116, 126 configured for having inlet pins of an inlet inserted therein.

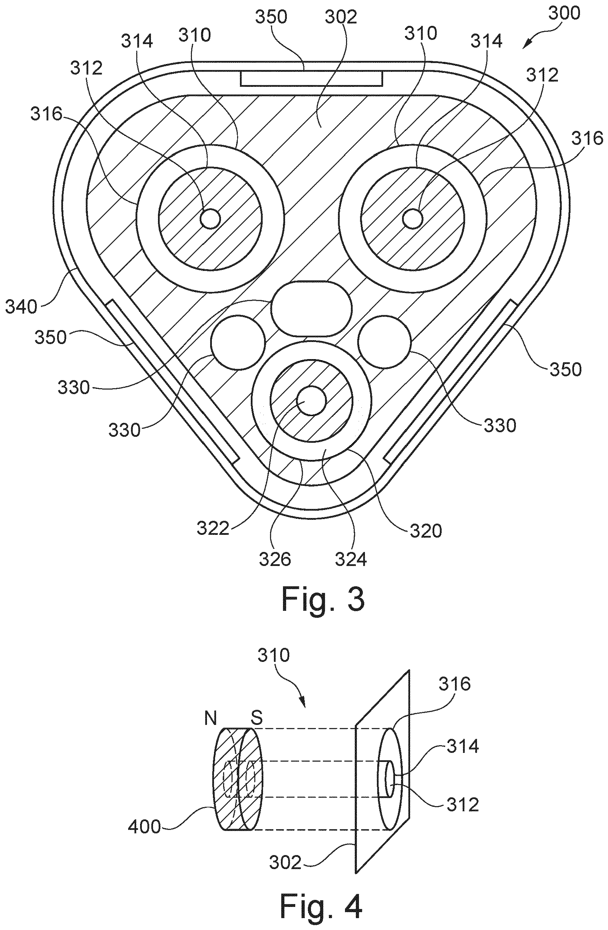

When connecting a connector 100 to a vehicle inlet, such as the vehicle inlet 300 shown in Fig. 3, the skirt 140, the sleeve 116, 126 and/or the central pin 112, 122 may enter complementary recesses within the vehicle inlet.

Referring now to Fig. 2, portions of a DC contact 110 are shown in a side view. Aspects of the DC contact 110 described with reference to Fig. 2 may likewise apply to the PE contact 120.

Fig. 2 shows the sleeve 116, and the groove 114 defined by the sleeve 116. The pin 112 is omitted in the figure for clarity, and may be omitted in some embodiments. The sleeve 116 may be described as a hollow cylinder and/or comprise portions resembling a hollow cylinder. The pin 112 may extend along an axis of the hollow cylinder. As shown in the figure, a (first) connector magnetic element 200 may be provided within the body of the sleeve 116. The connector magnetic element 200 may be a permanent magnet, and/or a ferromagnetic material, such as an iron, nickel and/or cobalt metal alloy. The connector magnetic element 200 may have a cylindrical, hollow-cylindrical, ring-shaped, rod-like or toroidal shape. The magnetization of the connector magnetic element 200, in case the connector magnetic element is a permanent magnet or a ferromagnetic material magnetized by an external magnetic field, may be essentially parallel to the cylinder axis, i.e. have the poles N and S as shown in Fig. 2, which may be reversed.

The connector magnetic element 200 may be provided as an insert within the sleeve 116. For example, the insert may be molded into the sleeve 116 and/or the contact 110, particularly over-molded. In some embodiments, the sleeve 116 forms a portion of the body of the connector. Accordingly, the connector magnetic element 200 may be an (over-)molded insert included in the connector body. Beneficially, the over-molding may provide electrical insulation between the magnetic element and current-carrying portions of the contact 110.

According to embodiments, additionally, or alternatively to the connector magnetic element 200, the connector 100 shown in Fig. 1 may include at least one (second) connector magnetic element 150 provided within a skirt portion of the connector. The skirt portion includes the skirt 140. The connector magnetic element 150 may be provided within the skirt 140, e.g. as an over-molded insert. In Fig. 1, the connector magnetic element 150 is shown attached to an outside of the sleeve, i.e. a sidewall of the skirt facing away from the connector body. Likewise, the connector magnetic element 150 may be flush with the outside of the sleeve, and/or integrated into the sleeve. The connector magnetic element 150 may be a permanent magnet, and/or a ferromagnetic material, such as an iron, nickel and/or cobalt metal alloy. The connector magnetic element 150 may be essentially plate-shaped and/or rectangular.

According to embodiments, at least one of the connector magnetic element 200 and/or the connector magnetic element 150 is an electromagnet. For example, in a preferable embodiment, the (second) connector magnetic element 150 may be an electromagnet, and the (first) connector magnetic element 200 may be a permanent magnet and/or ferromagnetic material. Alternatively, the (second) connector magnetic element 150 may be a permanent magnet and/or ferromagnetic material, and the (first) connector magnetic element 200 may be an electromagnet. In some embodiments, some of the magnetic elements shown in Fig. 1 may be omitted. For example, the (first) connector magnetic element 200 may be omitted.

Referring now to Fig. 3, a vehicle inlet 300 is described. The inlet 300 is a complement to the connector 100. Several of the features described with reference to the connector 100 apply to the inlet 300, and only the differences with respect to the connector 100 will be explained in detail. Electrical contacts, particularly DC contacts 310 and a PE contact 320, are provided to form an electrical connection with the DC contacts 110 and PE contact 120 of the connector 100.

The inlet 300 has a body with a surface 302. The surface 302 may be essentially plan, with indentations and/or recesses corresponding to the protrusions of the connector 100. In a simplified example, the surface 302 may be essentially flush with an outer surface of the vehicle inlet. The surface 302 may be parallel to the drawing plane, with the recesses receding behind the drawing plane, i.e. away from the viewer.

In some embodiments, the DC contacts 310 and the PE contact 320 include a pin receptacle 312, 322 for receiving the central pin 112, 122 of the connector 100. The contacts 310, 320 further include an inlet pin 314, 324 configured for being inserted into the corresponding grooves 114, 124. The inlet pin 314, 324 may be essentially coaxial with the pin receptacle 312, 322. The contacts 310, 320 further include a recess formed between the inlet body and the inlet pin 314, 324, configured for receiving the sleeves 116, 126 of the connector 100. The inlet 300 further includes complements 330 for the data contacts 130 of the connector. A groove 340 is provided in a skirt portion of the inlet and configured for receiving the skirt 140 of the connector 100. The groove 340 may define and/or be provided about a perimeter of the vehicle inlet 300.

The inlet pins 314, 324 may be configured for forming an electrical connection with contacts of the connector. For example, a radially outward surface of the pins 314, 324 may comprise an electrically conductive material and/or material coating, such as a metal and/or metal coating, configured for contacting the tulip-type sleeves 116, 126 of the connector. Accordingly, the pins 314, 324 may be insertable into the tulip-type sleeves 116, 126 of the connector 100.

Referring now to Fig. 4, portions of a DC contact 310 are shown in a side view. Aspects of the DC contact 310 described with reference to Fig. 4 may likewise apply to the PE contact 320.

Fig. 4 shows the recess 316 being provided in the inlet body and extending inwardly from the surface 302. The inlet pin 314 with the pin receptacle 312, extends within the recess 316 and is essentially flush with the surface 302. The inlet pin 314 may be described as a hollow cylinder and/or comprise portions resembling a hollow cylinder. The pin receptacle 312 may extend along an axis of the hollow cylinder. As shown in the figure, a (first) inlet magnetic element 400 may be provided within the inlet body, and essentially contact, or be provided adjacent, a bottom surface of the recess 316. The inlet magnetic element 400 may be a permanent magnet, and/or a ferromagnetic material, such as an iron, nickel and/or cobalt metal alloy. The magnetization of the inlet magnetic element 400, in case the connector magnetic element is a permanent magnet or a ferromagnetic material magnetized by an external magnetic field, may be essentially parallel to the cylinder axis of the inlet pin 314, i.e. have the poles N and S as shown in Fig. 4, which may be reversed.

The connector magnetic element 400 may be provided as an insert within the inlet body. For example, the insert may be molded into the inlet body, particularly over-molded. Beneficially, the over-molding may provide electrical insulation between the inlet magnetic element 400 and current-carrying portions of the contact 310.

In some embodiments, alternatively to the configuration shown in Fig. 4, the inlet magnetic element 400 may be provided within the inlet pin 314 essentially as described with respect to the connector DC contact 110 shown in Fig. 2, i.e. the inlet magnet element may be an insert provided as an over-molded insert within the inlet pin 314. As shown in Fig. 4, the inlet magnetic element 400 may have a cylindrical, hollow-cylindrical, ring-shaped, rod-like or toroidal shape.

According to embodiments, additionally, or alternatively to the inlet magnetic element 400, the inlet 300 shown in Fig. 3 may include at least one (second) inlet magnetic element 350 provided within a sleeve portion of the inlet, such as about or adjacent the groove 340. The sleeve portion includes the groove 340. The inlet magnetic element 350 may be provided within the groove 340, e.g. as an over-molded insert. In Fig. 3, the inlet magnetic element 350 is shown attached to a surface within the groove 340, i.e. an inside surface facing towards the inlet body. Likewise, the inlet magnetic element 350 may be flush with the groove 340, and/or integrated into a sidewall of the groove 340, such as an outer sidewall. The inlet magnetic element 350 may be a permanent magnet, and/or a ferromagnetic material, such as an iron, nickel and/or cobalt metal alloy. The inlet magnetic element 350 may be essentially plate-shaped and/or rectangular.

In some preferred embodiments, the inlet magnetic element 350 may be a switchable magnet, such as an electromagnet and/or an electro-permanent magnet. Additionally, or alternatively, the connector magnetic element 150 may be a switchable magnet. Additionally, or alternatively, the magnetic elements provided in the contacts 110, 120, 310, 320 may be a switchable magnet.

According to embodiments, at least one of the inlet magnetic element 400 and/or the inlet magnetic element 350 is an electromagnet. For example, in a preferable embodiment, the (second) connector magnetic element 350 may be an electromagnet, and the (first) inlet magnetic element 400 may be a permanent magnet and/or ferromagnetic material. Alternatively, the (second) inlet magnetic element 350 may be a permanent magnet and/or ferromagnetic material, and the (first) inlet magnetic element 400 may be an electromagnet. In some embodiments, some of the magnetic elements shown in Fig. 3 may be omitted. For example, the (first) inlet magnetic element 400 may be omitted.

Beneficially, according to a preferred embodiment, the connector 100 may include a permanent magnet or a ferromagnetic material, such as a steel insert, as the (second) magnetic element 150, and the vehicle inlet may include an electromagnet as the (second) magnetic element 350. Beneficially, the electromagnet may be activated while forming a connection between the connector 100 and the inlet 300. Activating the electromagnet may cause an attractive force between the connector and the inlet, which may assist a user in plugging in the connector 100. Once the connector 100 is fully inserted into the inlet, the electromagnet may be deactivated. Beneficially, when the connector is to be separated from the inlet while the electromagnet is deactivated, no attractive force needs to be overcome in addition to other mechanical forces.

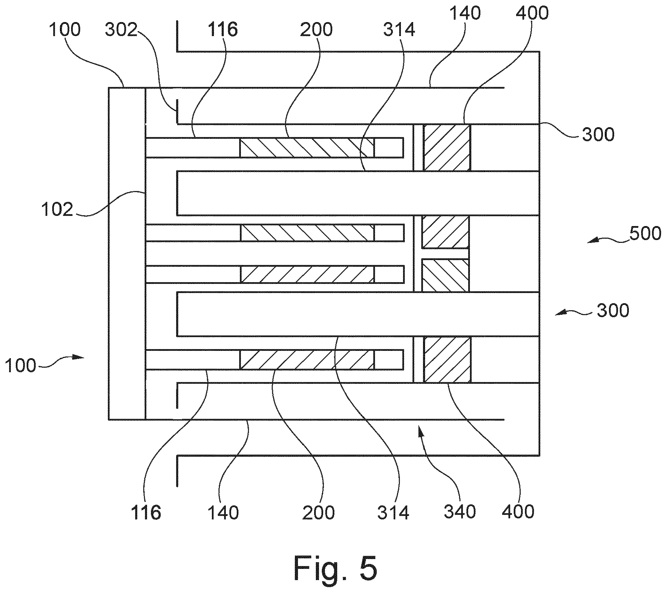

Referring now to Fig. 5, a connector 100 inserted into an inlet 300 is shown in a schematic cutaway side view, forming an interconnection 500. In the Figure, two contacts formed between the DC connector contacts 110 and the DC vehicle inlet contacts 310 are shown. Aspects described with reference to the contacts 110, 310 may likewise apply to the PE contacts 120, 320. In the interconnection, magnetic elements 200, 400 are provided as over-molded inserts, as described in further detail with reference to Fig. 2 and 4. For example, the inlet magnetic element 400 may be a permanent magnet, and the connector magnetic element 200 may be a permanent magnet, or a magnetizable material.

When the connector 100 is placed in the vicinity of the inlet 300, magnetic fields of the connector magnetic element 200 and the inlet magnetic element 400 interact. The magnetic interaction between the inlet magnetic element 400 and the connector magnetic element 200 is attractive so that a magnetic interaction force attracts the connector to the inlet. In particular, the attractive force may pull the connector 100 towards the inlet 300, and/or assist in plugging the connector 100 into the inlet 300 to reach the plugged-in state shown in Fig. 5. The magnetic interaction may stabilize the plugged-in state.

According to embodiment, the magnetic element, i.e. the connector magnetic element 200 and/or the inlet magnetic element 400, may have magnetic poles. The magnetic poles may be aligned and/or have an alignment along the plug-in direction of the connector 100 and/or the inlet 300. The plug-in direction may be essentially parallel to an axial direction of the skirt portion of the connector 100, and/or a cylinder axis of one or more of the contacts 110, 120, and/or the complementing features of the inlet. In the example shown in Fig. 5, the connector magnetic element 200 may have an N pole at the end facing towards the inlet 300 and an S pole at the end facing away from the inlet 300. Correspondingly, the inlet magnetic element may have an S pole at the end facing towards the connector 100, and an N pole at the end facing away from the connector 100. Alternatively, the poles may be reversed.

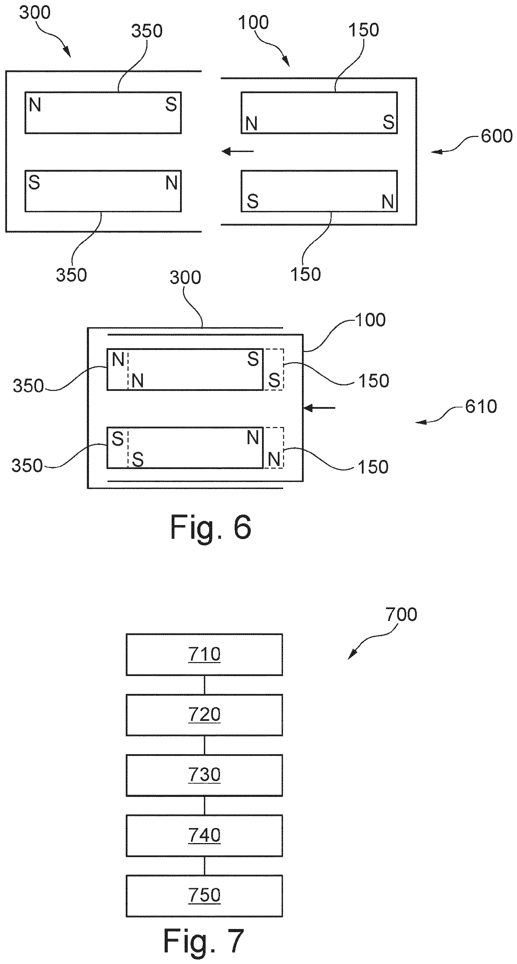

Referring now to Fig. 6, a connector 100 and an inlet 300 are shown during a plug-in operation in a schematic side view. The configuration 600 shows the unplugged state, and the configuration 610 shows the plugged-in state. Some features have been omitted in the Figure for clarity. Fig. 5 shows portions of the connector skirt 140 and the inlet groove 340, having provided therein the magnetic elements 150 and 350.

In the example shown in Fig. 6, the connector magnetic element 150 includes, for each side of the skirt 140, two plate-shaped magnets. Likewise, the inlet magnetic element 350 includes two corresponding plate shaped magnets. Accordingly, the inlet 300 having 3 sides may include 6 magnets, and the connector 100 having 3 sides may include 6 magnets. It should be noted that the number of magnets is exemplary, and the magnetic elements 150, 350 may include any number of individual magnets or magnetizable inserts, such as one, two, three, four or even five elements for each side of the skirt portion.

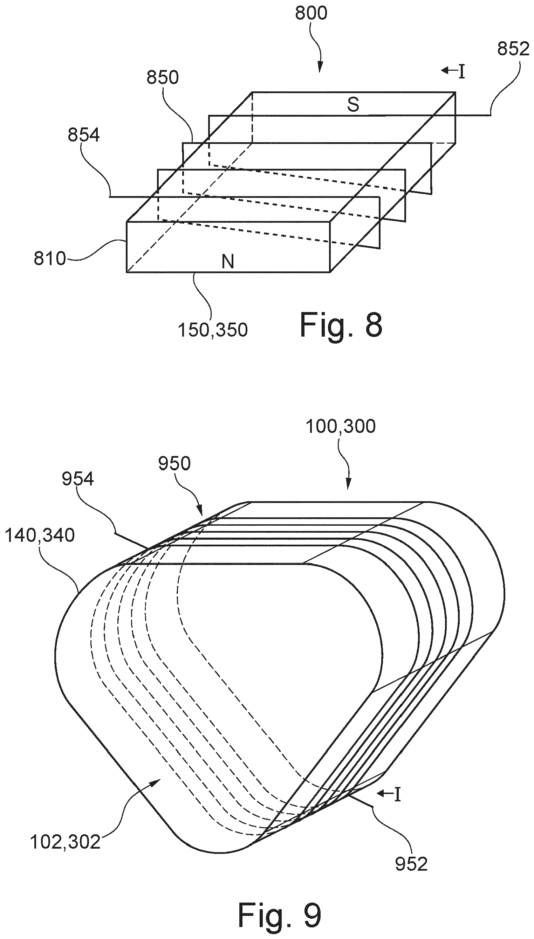

According to embodiments, additionally, or alternatively to the example shown in Fig. 6, the connector 100 and/or preferably the inlet 300 may include a switchable magnet, such as an electromagnet. In some embodiments, the switchable magnet may be provided in the same or similar configuration as shown in Fig. 6, i.e. include essentially plate-shaped switchable magnetic elements. In some embodiments, an electromagnet may include one or more coils wound within the skirt 140 or in or adjacent the groove 340, e.g. within the periphery of the groove, e.g. as shown in Fig. 9. The coils may include windings being provided essentially orthogonally to the plug-in direction of the connector and/or the inlet. Accordingly, a magnetic field vector of the magnetic field generated by the coils may be essentially parallel to the plug-in direction in the connector body and/or inlet body. The coils may include a single coil. The coils may include a plurality of coils. In particular, a plurality of coils may be individually switchable, e.g. according to a sensed position of the connector 100 relative to the inlet 300 during the plug-in operation. Providing individually switchable coils may allow a controller to operate the coils such that a plug in operation is assisted with a variable attractive force, which may improve smoothness and ease of the plug in operation.

According to embodiment, the magnetic element, i.e. the connector magnetic element 150 and/or the inlet magnetic element 350, may have magnetic poles. The magnetic poles may be aligned and/or have an alignment along the plug-in direction of the connector 100 and/or the inlet 300. The plug-in direction may be essentially parallel to an axial direction of the skirt portion of the connector 100, and/or a cylinder axis of one or more of the contacts 110, 120, and/or the complementing features of the inlet. In the example shown in Fig. 6, a connector magnetic element 200 may have an N pole at the end facing towards the inlet 300 and an S pole at the end facing away from the inlet 300. Correspondingly, an inlet magnetic element may have an S pole at the end facing towards the connector 100, and an N pole at the end facing away from the connector 100. Alternatively, the poles may be reversed for some or all of the magnetic elements 150, 350.

As shown in Fig. 6, when the connector 100 is inserted into the vehicle inlet 300 by moving it towards the plugged-in position along the axial direction, the connector magnetic element 150 at least partially aligns with the inlet magnetic element 350 so that a first pole of the first magnetic element at least partially overlaps, in a direction perpendicular to the axial direction, with a second pole of the second element. The second pole has a magnetization opposite the magnetization of the first pole. When inserting the connector 100 further, poles of the same orientation begin to overlap. Accordingly, during the plug-in operation, the force caused by the magnetic interaction is strongest while the connector is in a non-inserted or semi-inserted position, and decreases when the connector is fully plugged into the vehicle inlet. The magnetic elements 150 may be positioned accordingly to adjust the force with respect to the position of the connector relative to the vehicle inlet. This may beneficially allow the connector 100 and the vehicle inlet 300 to be connected such that no or only a limited magnetic force needs to be overcome when disconnecting the connector from the vehicle inlet.

As shown in Fig. 6, in some embodiments, the magnetic element pairs 150, 350 may be arranged such that the poles of the magnets alternate. While not limited to this embodiment, the alternating of the magnetic poles may beneficially assist in aligning the connector and the vehicle inlet, e.g. while the connector is in the vicinity of, but not yet contacting the vehicle inlet. In particular, the magnetic interaction between the connector magnetic element 150 and the inlet magnetic element 350 may causes an alignment force. The alignment force may cause the connector 100 to rotationally and/or linearly align with respect to the inlet. For example, in case the connector 100 approaches the vehicle inlet rotated about the axis by an angle, a detractive and/or repelling force between the same magnetic poles may cause a torque about the axis, the torque assisting a user in rotating the connector until complementary magnetic elements 150 with opposite magnetic poles face each other.

According to embodiments, an electric vehicle charging system including the interconnector, particularly the connector 100 and/or the vehicle inlet 300 according to embodiments described herein is described. For example, the vehicle charging system may include a charging station having the connector 100 provided at a charging cable, the charging cable being connected to the charging station. The charging cable and/or the connector 100 may be liquid cooled. The vehicle inlet 300 may be provided at a vehicle, and/or a plurality of vehicles configured for being charged at the electric vehicle charging system.

According to beneficial embodiments, the vehicle inlet may include one or more permanent magnets forming the inlet magnetic element 350 or the inlet magnetic element 400. Complementing the inlet magnetic element, a connector 100 may include permanent magnets forming the connector magnetic element 150 or the connector magnetic element 200. Beneficially, the connector 100 may include magnetizable ferromagnetic inlets as magnetic elements, such as inlets including a ferromagnetic material, such as a steel alloy. This may beneficially provide a more resilient connector / inlet pair, since mechanical shocks are more likely to occur for the connector, which may negatively affect magnetization of permanent magnets provided for the magnetic elements 150, 200.

According to beneficial embodiments, the vehicle inlet may include one or more electromagnets forming the inlet magnetic element 350 or the inlet magnetic element 400. Beneficially, electromagnets may have a comparably lighter weight compared to a permanent magnet. Beneficially, the magnetization of the electromagnet may be controlled, e.g. by the vehicle and/or the charging system, to adjust the attractive force during plugging-in or unplugging of the connector 100.

According to embodiments, the vehicle charging system according to embodiments may be configured for providing a DC charging power of at least 500 kW. Beneficially, the charging system may directly interface with a battery of the electric vehicle, which may beneficially allow the vehicle to be devoid of additional charging components, such as charging controllers. According to embodiments, the vehicle charging system may be a Megawatt Charging System, e.g. as known at the time of filing of this disclosure.

Referring now to Fig. 7, a method 700 of charging an electric vehicle is described. The method 700 includes providing 710 an inlet of an electric vehicle, such as the inlet 300 according to embodiments described herein. The inlet includes at least one magnetic element configured for interacting with a connector magnetic element. Interacting may particularly include a magnetic interaction.

The method 700 further includes providing 720 a connector, such as the connector 100 according to embodiments described herein. The connector may be a connector of a vehicle charging station, and configured for providing a DC charging power to charge a battery of the electric vehicle. The connector includes at least one magnetic element configured for interacting with an inlet magnetic element. Interacting may particularly include a magnetic interaction.

The method 700 may include activating 730 an electromagnet. The electromagnet may be the connector magnetic element and/or the inlet magnetic element. Preferably, the inlet magnetic element may be an electromagnet, and the connector magnetic element may be a permanent magnet or a magnetizable ferromagnetic element. In some embodiments, both the inlet magnetic element and the connector magnetic element may be electromagnets. Accordingly, activating 730 the electromagnet may include activating the inlet magnetic element and the connector magnetic element.

The method 700 further includes placing 740 the connector into a vicinity of the inlet to cause a magnetic interaction between the inlet magnetic element and the connector magnetic element. The magnetic interaction causes a force between the inlet and the connector. The force attracts the connector to the inlet. The force may assist a user of the connector, e.g. a user of a charging station including the connector, in directing the connector towards the inlet.

According to embodiments, the method 700 may include guiding the connector towards the inlet by the magnetic interaction. In the embodiment, connector magnetic elements and inlet magnetic elements may be provided such that a magnetic interaction, in addition to the attractive force, cause an alignment force assisting a user in aligning the connector to the inlet. The alignment force may include a torque component, i.e. a force causing or assisting a user in rotating the connector with respect to the inlet such that the connector is in a rotated position suitable for being inserted into the inlet.

The method 700 further includes inserting 750 the connector into the inlet. The force generated in operation 740 may be present while inserting the connector. The force may assist a user in inserting the connector into the inlet. The force may assist the user in forming a safe, reliable connection, e.g. by assuring that the connector is fully inserted into the inlet.

According to embodiments, following the inserting 750 of the connector, the method 700 may include deactivating a switchable magnetic element, such as a switchable inlet magnetic element 350, 400 or a switchable connector magnetic element 150, 200. Alternatively, e.g. in embodiments having permanent magnets and/or magnetic inserts, the magnetic interaction and/or attractive force may remain active during a charging procedure, i.e. until the connector is disconnected and/or moved away from the inlet.

According to embodiments, following the inserting 750 of the connector, the method 700 may include charging the electric vehicle with a DC charging power, particularly a charging power of at least 50 kW, 100 kW, 200 kW, at least 350 kW, at least 500 kW, at least 750 kW, at least 1 MW, at least 2 MW, or even at least 3 MW.

Referring now to Fig. 8, a magnetic element 800 according to embodiments is described. The magnetic element 800 may be a magnetic element 150, 350 as shown in Fig. 1, Fig. 3 and Fig. 6. Likewise, according to some embodiments, aspects of the magnetic element 800 may apply to a magnetic element 200, 400 shown in Fig. 2 and Fig. 4.

The magnetic element 800 is an electromagnet, including a magnetic core 810. The magnetic core 810 may essentially define the shape of the magnetic element 800. For example, as shown in Fig. 8, the magnetic element 800 may be essentially cuboid. A cuboid magnetic element 800 may be particularly suitable as a magnetic element 150, 350 shown in Fig. 1 and Fig. 3. Likewise, a core having a cylindrical, hollow-cylindrical, ring-shaped, rod-like or toroidal shape may be provided for the magnetic element 200, 400 shown in Fig. 2 and Fig. 4.

A conductor 850, such as a wire, is wound around the magnetic core 810. The conductor 850 is wound in an essentially helical manner, such that when an electrical current is induced in the conductor between the terminals 852, 854, magnetic poles N and S are formed in the magnetic core 810.

Referring now to Fig. 9, a magnetic element 950 in a connector 100 or and inlet 300 is shown. The magnetic element 950 is an electromagnet and may be formed in or adjacent the skirt 140 of the connector 100, or in or adjacent the groove 340 of the inlet 300. Accordingly, the magnetic element 950 may be an implementation of the magnetic element 150 and/or 350. Accordingly, one or more magnetic elements 950 may be provided in the connector 100 or the inlet 140. The magnetic element 950 comprises a conductor forming a coil. In some embodiments, the magnetic element 950 may be devoid of a magnetic core, e.g. the magnetic element 950 may operate as an air-core coil. In some embodiments, the magnetic element 950 may be described as a solenoid. Accordingly, when a current is induced in the conductor and/or applied to the terminals 952, 954, a magnetic field is generated having an orientation along a plug-in direction of a connector, such as a direction orthogonal to the surface 102, 302 and/or an axial direction of the skirt portion 140 or the groove 340.

It should be noted that the number of turns of the conductors 850 and 950 shown in Fig. 8 and Fig. 9 is exemplary, and may be different, particularly higher, in some embodiments. Beneficially, properties of the magnetic fields, such as a desired attracting force, may be controlled by adjusting properties of the conductor 850 or the conductor of the magnetic element 950. Additionally, or alternatively, properties of the magnetic field may be adjusted by modifying properties of the current I, such as a strength of the current, or a polarity of the current.

According to embodiments, a controller is described. The controller may be configured for controlling one or more of the magnetic elements being electromagnets, such as the magnetic elements 800 and/or 950. A controller for controlling a connector magnetic element being an electromagnet may be included in a charging system. A controller for controlling an inlet magnetic element being an electromagnet may be included in a vehicle having the inlet installed therein.

The controller may be configured for selectively providing a current to the magnetic elements 800 and/or 950 for selectively controlling, switching and/or driving the electromagnets. The controller may be configured for activating the electromagnet to generate an attractive force between the electromagnet and a second magnet, the second magnet being an electromagnet, a permanent magnet, or a ferromagnetic material. The controller may be configured for receiving a distance signal, e.g. from a distance sensor, for selectively enabling the electromagnet once the distance between a connector and a vehicle inlet is within a predetermined range, such as at 10 cm or below, or even at 5 cm or below.

The controller may be configured for deactivating the electromagnet once a connection between the connector and the vehicle inlet has been established, particularly after a connector has been fully plugged into a vehicle inlet. Accordingly, the controller may be configured for detecting if a connection has been established, e.g. by conducting a connection test according to methods known in the art, and/or receiving a signal indicative of a connection status.

The controller may be configured for activating the electromagnet at a reverse polarity to assist in unplugging a connector from a vehicle inlet. In particular, the controller may drive the electromagnet such that poles of the electromagnet face one or more second magnetic elements having the same polarity to generate a repelling force between the electromagnet and the second magnet.

## Claims

1. An interconnector (100, 300) for forming an electrical connection between a direct current, DC, charging station and an electric vehicle, the interconnector (100, 300) comprising:
at least one first magnetic element (150, 200, 350, 400) configured for interacting, by magnetic interaction, with a second magnetic element (150, 200, 350, 400) of a complement for the interconnector (100, 300), wherein
the first magnetic element (150, 200, 350, 400) comprises an electromagnet (800, 950), and wherein
the magnetic interaction between the first magnetic element (150, 200, 350, 400) and the second magnetic element (150, 200, 350, 400) is attractive so that a magnetic interaction force attracts the interconnector (100, 300) to the complement.

2. An interconnector being a connector (100) for an electric vehicle charging station and configured for being inserted into an inlet (300) of an electric vehicle, the connector (100) comprising:
electrical contacts (110, 120) for forming an electrical connection with the inlet (300) and configured for providing a DC charging power;
a first magnetic element being a connector magnetic element (150, 200) configured for interacting, by magnetic interaction, with a second magnetic element being an inlet magnetic element (350, 400), wherein
the magnetic interaction between the inlet magnetic element (350, 400) and the connector magnetic element (150, 200) is attractive so that a magnetic interaction force attracts the connector (100) to the inlet (300).

3. The interconnector according to claim 1, the interconnector being an inlet (300) for an electric vehicle and configured for receiving a connector (100) of an electrical vehicle charging station, the inlet (300) comprising
electrical contacts (310, 320) for forming an electrical connection with the connector (100) and configured for receiving a DC charging power;
the first magnetic element being an inlet magnetic element (350, 400) configured for interacting, by magnetic interaction, with a second magnetic element being a connector magnetic element (150, 200), wherein
the magnetic interaction between the inlet magnetic element (350, 400) and the connector magnetic element (150, 200) is attractive so that a magnetic interaction force attracts the connector (100) to the inlet (300).

4. The interconnector (100, 300) according to any one of the preceding claims, wherein the first magnetic element (150, 200, 350, 400) comprises at least one selected from the group consisting of: a permanent magnet, and a ferromagnetic material.

5. The interconnector (100, 300) according to claim 1 being a connector according to claim 2, wherein the connector magnetic element (150, 200) comprises the electromagnet (800, 950).

6. The interconnector (100, 300) according to any one of claims 2 to 5, wherein the electrical contacts (110, 120, 310, 320) comprise a +DC contact (110, 310), a -DC contact (110, 310) and a protective earth contact (120, 320), and optionally data contacts (130, 330) for providing a communication interface, particularly a communication interface according to ISO 15118.

7. The interconnector (100, 300) according to any one of claims 3 to 6 being an inlet (300), wherein the electrical contacts (310, 320) of the inlet (300) comprise pins (314, 324) configured for being inserted into tulip-type sleeves (116, 126) of a connector (100), or
the interconnector (100, 300) according to any one of claims 2, or 4 to 6 being a connector (100), wherein the electrical contacts (110, 120) of the connector (100) comprise tulip-type sleeves (116, 126) configured for having pins (314, 324) of an inlet (300) inserted therein.

8. The interconnector (100, 300) according to any one of the preceding claims, wherein
the interconnector (100, 300) being a connector (100) comprises a skirt portion (140), wherein the connector magnetic element (150) is provided within the skirt portion (140) of the connector (100), or
the interconnector (100, 300) being an inlet (300) comprises a groove (340) configured for receiving a skirt portion (140) of the connector (100), wherein the inlet magnetic element (350) is provided adjacent the groove.

9. The interconnector (100, 300) according to claim 8, wherein the first magnetic element (150, 200, 350, 400) comprises magnetic poles, the magnetic poles having an alignment essentially along an axial direction of the skirt portion (140) or the groove (340).

10. The interconnector (100, 300) according to claim 9, wherein, when the interconnector (100, 300) is inserted into the complement, the first magnetic element (150, 200, 350, 400) at least partially aligns with the second magnetic element (150, 200, 350, 400) so that a first pole of the first magnetic element (150, 200, 350, 400) at least partially overlaps, in a direction perpendicular to the axial direction, with a second pole of the second element, the second pole having a magnetization opposite the magnetization of the first pole.

11. The interconnector (100, 300) according to any one of the preceding claims, wherein the magnetic interaction between the first magnetic element (150, 200, 350, 400) and the second magnetic element (150, 200, 350, 400) causes an alignment force, the alignment force causing the interconnector (100, 300) to rotationally and/or linearly align with respect to the complement.

12. An electric vehicle charging system comprising the interconnector (100, 300) according to claim 1, the connector (100) according to claim 2 and/or the inlet (300) according to claim 3.

13. The charging system according to claim 12, wherein the charging system is configured for charging the electric vehicle with a DC charging power of at least 500 kW.

14. Method of charging an electric vehicle, the method comprising:
providing an inlet (300) of an electric vehicle, the inlet (300) comprising at least one inlet magnetic element (350, 400) configured for interacting with a connector magnetic element (150, 200);
providing a connector (100), the connector (100) comprising at least one connector magnetic element (150, 200) configured for interacting with an inlet magnetic element (350, 400);
placing the connector (100) into a vicinity of the inlet (300) to cause a magnetic interaction between the inlet magnetic element (350, 400) and the connector magnetic element (150, 200); wherein
the magnetic interaction causes a force between the inlet (300) and the connector (100), the force attracting the connector (100) to the inlet (300); and
inserting the connector (100) into the inlet (300).

15. The method according to claim 14, further comprising: guiding the connector (100) towards the inlet (300) by the magnetic interaction.
